Europäisches Patentamt

European Patent Office

Office européen des brevets

(19)

(11) Numéro de publication : **0 340 071 B1**

(12) **FASCICULE DE BREVET EUROPEEN**

(45) Date de publication du fascicule du brevet :
**22.04.92 Bulletin 92/17**

(51) Int. Cl.[5] : **C01G 49/10**

(21) Numéro de dépôt : **89401039.6**

(22) Date de dépôt : **14.04.89**

(54) **Procédé de préparation du chlorure ferrique à partir du chlorure ferreux.**

(30) Priorité : **29.04.88 FR 8805800**

(43) Date de publication de la demande :
**02.11.89 Bulletin 89/44**

(45) Mention de la délivrance du brevet :
**22.04.92 Bulletin 92/17**

(84) Etats contractants désignés :
**AT BE CH DE ES FR GB GR IT LI LU NL SE**

(56) Documents cités :
**FR-A- 2 410 629**

(56) Documents cités :
**CHEMICAL ABSTRACTS, vol. 82, no. 20, mai
1975, page 114, no 127078e, Columbus, Ohio,
US; & JP-A-74 113 798 (ASAHI ELECTRO-
CHEMICAL CO. LTD) 30-10-1974**

(73) Titulaire : **ATOCHEM**
**4 & 8, Cours Michelet La Défense 10**
**F-92800 Puteaux (FR)**

(72) Inventeur : **Clair, René**
**La Vrignoise Saint Julien**
**F-13500 Martigues (FR)**
Inventeur : **Gallet, Alain**
**11 avenue de la Durance**
**F-13117 Lavera (FR)**

Il est rappelé que : Dans un délai de neuf mois à compter de la date de publication de la mention de la
délivrance du brevet européen toute personne peut faire opposition au brevet européen délivré, auprès
de l'Office européen des brevets. L'opposition doit être formée par écrit et motivée. Elle n'est réputée
formée qu'après paiement de la taxe d'opposition (Art. 99(1) Convention sur le brevet européen).

## Description

La présente invention concerne un procédé de préparation du chlorure ferrique à partir du chlorure ferreux. Elle concerne plus particulièrement la préparation du chlorure ferrique en solution aqueuse titrant entre 35 et 45 % en poids. Cette formulation du chlorure ferrique est utilisée comme agent floculant dans le traitement des eaux. On peut se reporter au KIRK OTHMER 3ème édition, volume 24, pages 394-396 (1984) et au volume 10, page 498 (1980) où figure cette application. Le procédé le plus simple consiste à attaquer du fer par de l'acide chlorhydrique concentré, on obtient ainsi une solution à environ 36 % en poids de chlorure ferreux ($FeCl_2$) qu'on chlore pour obtenir une solution de chlorure ferrique ($FeCl_3$) titrant environ 41 % en poids et directement utilisable comme agent floculant. Cette solution à 41 % est la forme commerciale habituelle. Il est nécessaire d'obtenir une solution concentrée de $FeCl_2$ puisque le $FeCl_2$ et le $FeCl_3$ peuvent lors d'une concentration par évaporation subir une hydrolyse partielle donnant HCl. La présence d'HCl dans le $FeCl_3$ est gênante pour le traitement des eaux. Ce procédé nécessite l'utilisation d'acide chlorhydrique concentré.

Le brevet US 4.066.748 décrit un procédé à partir d'une solution de $FeCl_2$ venant d'un bain de décapage. Ce procédé oblige à concentrer le chlorure ferreux et nécessite une chloration en deux étapes.

Le brevet US 3.682.592 décrit un procédé similaire au précédent mais la solution de chlorure ferreux est mise en contact avec de l'oxygène.

On a maintenant trouvé un procédé très simple qui permet de préparer une solution concentrée de chlorure ferrique par chloration d'une solution diluée de chlorure ferreux.

Le procédé de l'invention consiste a préparer du chlorure ferrique à partir du chlorure ferreux et comprend les étapes suivantes :

a) on met en contact du chlore et une solution contenant du chlorure ferreux en présence d'une solution contenant du chlorure ferrique,

b) le produit obtenu en a) est détendu,

c) la phase liquide obtenue en b) est partiellement recyclée à l'étape a), l'autre partie constitue la production de chlorure ferrique.

Le chlorure ferreux se présente sous forme d'une solution aqueuse, de même pour le chlorure ferrique. "En présence de chlorure ferrique" veut dire qu'on injecte dans l'étape a) du chlorure ferrique en plus du chlorure ferreux, ce chlorure ferreux étant ensuite chloré en chlorure ferrique. On peut utiliser du chlore liquide ou gazeux, ou un gaz ou liquide contenant du chlore. La mise en contact peut se faire d'une façon quelconque, il suffit d'assurer un contact entre le chlore et le chlorure ferreux. On utilise par exemple un réacteur agité ou une colonne du genre colonne à distiller ou colonne d'absorption. On utilise avantageusement une colonne munie de dispositifs de contact tels que des plateaux ou des garnissages d'anneaux ou de plusieurs de ces dispositifs. La solution de chlorure ferreux et la solution de chlorure ferrique alimentent la colonne par le haut et le chlore est introduit en bas de cette colonne. En haut de cette colonne on recueille un peu de chlore si on en a utilisé un excès (par rapport à la quantité de chlorure ferreux), les gaz qui accompagnaient éventuellement le chlore et un peu de vapeur d'eau entraînée par sa tension de vapeur. En bas de la colonne on obtient une solution de chlorure ferrique. On ne sortirait pas du cadre de l'invention en introduisant les solutions de chlorure ferreux et de chlorure ferriques en plusieurs points de la colonne, de même pour le chlore qui peut être introduit en plusieurs points.

L'étape b) consiste à détendre la solution recueillie dans l'étape a). Cette détente provoque une vaporisation partielle de l'eau contenue dans la solution de chlorure ferrique, on obtient ainsi une concentration de la solution de chlorure ferrique. Cette détente est réalisée dans un réservoir quelconque, il suffit que sa géométrie permette de séparer la phase vapeur et la phase liquide.

L'étape c) du procédé de l'invention consiste à recycler une partie de la phase liquide précédente vers l'étape a) et la partie restante qu'on récupère constitue la production de chlorure ferrique, cette quantité correspond en nombres de moles à la quantité de chlorure ferreux introduite dans l'étape a).

Avantageusement cette solution est ramenée à température ambiante.

La solution de chlorure ferreux qui alimente l'étape a) peut être de concentration quelconque, elle peut aussi contenir de l'acide chlorhydrique. Avantageusement on utilise une solution de chlorure ferreux ne contenant pas d'acide chlorhydrique ce qui permet d'utiliser le chlorure ferrique directement comme agent floculant pour le traitement des eaux.

Avantageusement l'étape a) a lieu à une température modérée c'est-à-dire telle que cette température ajoutée au temps de séjour de l'étape a) ne provoque pas une hydrolyse du $FeCl_2$.

La réaction entre le chlorure ferreux et le chlore est totale. Avantageusement on respecte un temps de séjour du chlorure ferreux d'au moins 10 secondes et de préférence inférieur à 4 heures.

Il n'est pas nécessaire de chlorer tout le $FeCl_2$, les spécifications du chlorure ferrique peuvent parfois tolérer de 0,1 à 1 % en poids de $FeCl_2$ dans la solution de chlorure ferrique. On ne sortirait pas du cadre de l'invention en utilisant un excès de chlore par rapport à la stoechiométrie.

Avantageusement la température du milieu réactionnel de cette étape a) est comprise entre 50 et 100°C. La pression de l'étape a) peut être quelconque, par commodité on opère entre la pression atmosphérique et 6 bars, et de préférence entre la pression atmosphérique et 1 bar relatif.

La pression à laquelle on détend le produit obtenu en a) est liée à la quantité d'eau qu'on veut évaporer. Plus on détend, plus on évapore d'eau. La quantité d'eau évaporée dépend aussi du débit de solution qu'on détend, plus cette quantité est importante plus on évapore. Avantageusement la quantité de chlorure ferrique recyclée est comprise entre 1 et 10 fois la production.

La quantité d'eau à évaporer dépend de la concentration de la solution de $FeCl_2$ et de la concentration qu'on souhaite pour le $FeCl_3$ produit. La quantité de $FeCl_3$ recyclée permet aussi de contrôler la température, plus le débit recyclé est important, pour une même quantité de $FeCl_2$, moins la température de sortie de a) est élevée. Les calories fournies par la réaction de chloration de $FeCl_2$ sont essentiellement consommées par la détente qui se traduit par un abaissement de température. Si on souhaite évaporer plus d'eau il faut fournir de l'énergie, avantageusement on chauffe le produit obtenu en a) avant de le détendre. Avantageusement on ne chauffe pas au delà de 110°C pour ne pas dégrader le $FeCl_3$. On peut aussi répéter plusieurs fois le cycle chauffage-détente, il suffit bien évidemment après la détente de comprimer de nouveau la phase liquide, par exemple à l'aide d'une pompe. Avantageusement on détend jusqu'à une pression absolue comprise entre 0,05 et 0,3 bars. Le vide est assuré par exemple par une pompe ou un éjecteur à vapeur.

Selon une autre forme de l'invention on peut aussi réchauffer la solution de chlorure ferrique après la détente et avant son recyclage dans l'étape a), mais bien évidemment après le soutirage de la production, ce qui permet de fournir des calories à un faible niveau donc permet de valoriser des calories et aussi de ne pas trop élever la température du $FeCl_3$.

Selon une autre forme préférée de l'invention et pourvu que les niveaux de température soient compatibles on peut transférer les calories de la production de chlorure ferrique vers la solution de chlorure ferreux qui alimente l'étape a), ce qui permet de la préchauffer. Cette récupération permet de gagner un peu de calories et donc d'évaporer plus d'eau à la détente et de fournir moins de calories supplémentaires avant cette détente.

L'avantage de la présente invention est de pouvoir utiliser une solution diluée de chlorure ferreux pour produire une solution concentrée de chlorure ferrique tout en évitant d'utiliser des évaporateurs.

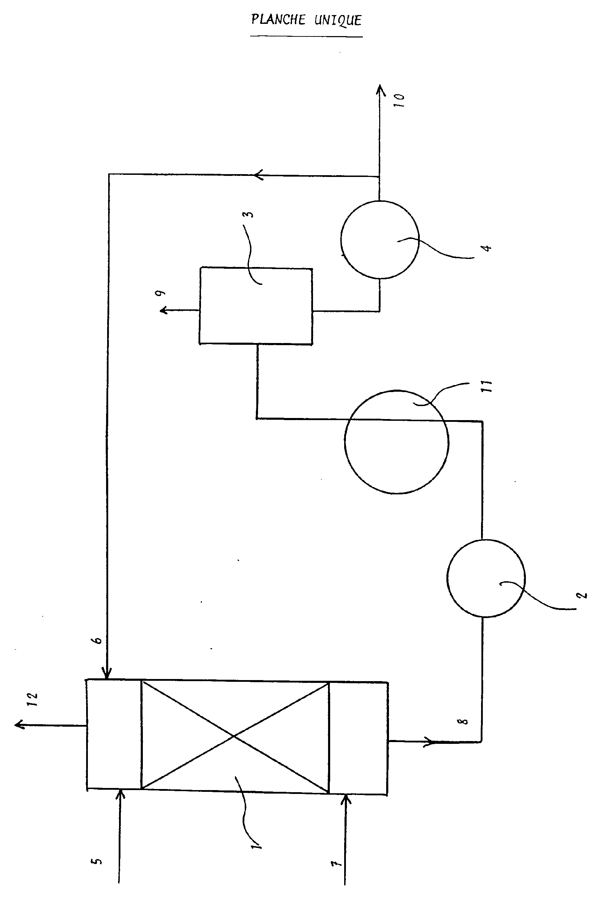

La planche unique ci-jointe représente un exemple de mise en oeuvre de l'invention. (1) représente une colonne dans laquelle s'effectue l'étape a), (3) est le pot de détente, (2) et (4) représentent des pompes. En (5) on introduit la solution de chlorure ferreux, en (6) le chlorure ferrique recyclé et en (7) le chlore. Par le tuyau (8) on amène le produit via l'échangeur (11) vers le pot de détente (3). Le pot (3) est relié par le tuyau (9) au système de vide. On reprend par la pompe (4) la phase liquide du pot de détente. La production est récupérée au tuyau (10). On recueille en (12) les inertes introduits avec le chlore.

Les exemples suivants illustrent l'invention sans la limiter.

### EXEMPLE 1

On utilise un dispositif conforme à la planche unique ci-jointe dans lequel la colonne (1) est en verre de diamètre intérieur à 0,35 m et présente une hauteur de garnissage de 10 m.

On introduit en (5) une solution de 296 kg/h de $FeCl_2$ et 704 kg/h d'eau à 80°C et en (7) un débit de 82,7 kg/h de chlore et 5 kg/h d'inertes. On recueille en (12) les 5 kg/h d'inertes et en (8) une solution de chlorure ferrique à 85°C. La colonne (1) opère à une pression de 1,1 bars absolus. On réchauffe le chlorure ferrique de 85 à 94°C par l'échangeur (11), puis on détend à une pression de 0,25 bar absolus. On recycle en (6) une solution contenant 2272 kg/h de $FeCl_3$ et 3269 kg/h d'eau et on soutire en (10) 379 kg/h de $FeCl_3$ dilués dans 545 kg/h d'eau.

### EXEMPLE 2

On opère comme dans l'exemple 1 mais en introduisant en (5) une solution plus diluée de $FeCl_2$ c'est-à-dire 296 kg/h $FeCl_2$ dans 963 kg/h d'eau. La solution de $FeCl_3$ en (8) est à 76°C, on la réchauffe à 106°C puis on détend à 0,15 bar absolus, la température de la phase liquide descend à 62°C. On obtient en (10) la même solution concentrée de $FeCl_3$.

### EXEMPLE 3

On opère comme dans l'exemple 1 mais dans une colonne de diamètre 0,4 m et en introduisant en (5) une solution plus diluée de $FeCl_2$ c'est-à-dire 296 kg/h de $FeCl_2$ dans 963 kg/h d'eau. La solution de $FeCl_3$ en (8) est à 69°C, on la réchauffe à 92°C puis on détend à 0,15 bar absolus. On obtient en (10) la même solution concentrée de $FeCl_3$, par contre le débit de recyclage en (6) est 3790 kg/h de $FeCl_3$ dilué dans 5450 kg/h d'eau.

### Revendications

1. Procédé de préparation de chlorure ferrique à partir de chlorure ferreux, caractérisé en ce qu'il comprend les étapes suivantes :

    a) on met en contact du chlore et une solution contenant du chlorure ferreux en présence d'une solution contenant du chlorure ferrique,

    b) le produit obtenu en a) est détendu,

    c) la phase liquide obtenue en b) est partiellement recyclée à l'étape a), l'autre partie constitue la production de chlorure ferrique.

2. Procédé selon la revendication 1, caractérisé en ce que l'étape b) est précédée d'un chauffage.

3. Procédé selon la revendication 1 ou 2, caractérisé en ce que la quantité de chlorure ferrique recyclée est comprise entre 1 et 10 fois la production.

4. Procédé selon l'une des revendications 1 à 3, caractérisé en ce que la production de chlorure ferrique est utilisée pour préchauffer la solution de chlorure ferreux en amont de l'étape a).


**Patentansprüche**

1. Verfahren zur Herstellung von Eisen(III)- chlorid, ausgehend von Eisen(II)-chlorid, dadurch gekennzeichnet, daß es folgende Stufen enthält:

a) In Berührung bringen von Chlor und einer Eisen(II)-chlorid enthaltenden Lösung in Gegenwart einer Eisen(III)-chlorid enthaltenden Lösung,

b) Entspannen des in a) erhaltenen Produkts,

c) teilweise Recyclisierung der in b) erhaltenen flüssigen Phase in die Stufe a), wobei der andere Teil die Ausbeute an Eisen(III)-chlorid darstellt.

2. Verfahren nach Anspruch 1, dadurch gekennzeichnet, daß der Stufe b) eine Erwärmung vorausgeht.

3. Verfahren nach Anspruch 1 oder 2, dadurch gekennzeichnet, daß die Menge recyclisierten Eisen(III)-chlorids zwischen dem 1- und 10-fachen der Ausbeute beträgt.

4. Verfahren nach einem der Ansprüche 1 bis 3, dadurch gekennzeichnet, daß der Ausstoß an Eisen(III)-chlorid zum Vorwärmen der Eisen(II)-chloridlösung stromaufwärts zur Stufe a) verwendet wird.


**Claims**

1. Process for the preparation of ferric chloride from ferrous chloride, characterised in that it comprises the following steps:

a) chlorine and a solution containing ferrous chloride are brought into contact in the presence of a solution containing ferric chloride,

b) the product obtained in a) is decompressed,

c) the liquid phase obtained in b) is partially recycled to step a); the remaining part forms the ferric chloride output.

2. Process according to Claim 1, characterised in that step b) is preceded by heating.

3. Process according to Claim 1 or 2, characterised in that the quantity of ferric chloride which is recycled is between 1 and 10 times the output.

4. Process according to one of Claims 1 to 3, characterised in that the ferric chloride output is employed for preheating the ferrous chloride solution upstream of step a).

PLANCHE UNIQUE